(19) Europäisches Patentamt
European Patent Office
Office européen des brevets

(11) Publication number: **0 013 282**
A1

(12) # EUROPEAN PATENT APPLICATION

(21) Application number: 79100074.8

(22) Date of filing: 11.01.79

(51) Int. Cl.[3]: C 08 G 81/00
C 08 G 63/62, C 08 L 69/00

(43) Date of publication of application:
23.07.80 Bulletin 80/15

(84) Designated Contracting States:
BE DE FR GB IT NL

(71) Applicant: THE DOW CHEMICAL COMPANY
2030 Abbott Road Post Office Box 1967
Midland, Michigan 48640(US)

(72) Inventor: Byrne, Joseph Bernard
1 Jeanne Court
Antioch Contra Costa California(US)

(72) Inventor: Weber, Christiaan Albert
2724 Daniels Road
Sanford Midland Michigan(US)

(74) Representative: Casalonga, Alain et al,
Bureau D.A. Casalonga Lilienstrasse 77
D-8000 München 80(DE)

(54) **Copolycarbonates of phenolphthalein polycarbonates and other polycarbonates and their preparation.**

(57) This invention is directed to a copolycarbonate of a polycarbonate of a tritytldiol such as phenolphthalein and a polycarbonate of another diol such as bisphenol-A and to a process for preparing the copolycarbonate. The copolycarbonate is prepared by contacting the starting polycarbonates under conditions of shear and/or temperature sufficient to cause reaction of the polycarbonates to form a copolycarbonate of the polycarbonates. The copolycarbonates of this invention exhibit generally improved impact resistance, clarity and flame resistance as compared with the starting polycarbonates.

EP 0 013 282 A1

# COPOLYCARBONATES OF PHENOLPHTHALEIN POLYCARBONATES AND OTHER POLYCARBONATES

Polycarbonate resins have been known to the polymer arts for some time. Such resins are notably tough and rigid and have high softening temperatures. Polycarbonates of particular interest to the polymer arts are the polycarbonates of the bisphenol-A type diols. Also known are the phenolphthalein polycarbonates and the polycarbonates of similar trityldiols. Such polycarbonates are characterized by softening points significantly higher than the softening points of the more common polycarbonates of bisphenol-A type diols.

As taught in U.S. Patent No. 3,036,036, copolymers of phenolphthalein and other diols have been produced wherein the copolymers possess somewhat higher softening points characteristic of the phenolphthalein homopolymer polycarbonates. Unfortunately, the higher softening property attributable to the presence of the phenolphthalein in the polycarbonate has been achieved only by sacrificing some

property attributable to the other diol of the copolymer. For example, in the case of phenolphthalein/bisphenol-A copolycarbonates, an increase of softening point resulting from an increase of phenolphthalein content is accompanied by a loss of impact strength resulting from the decrease of the bisphenol-A content.

Because different applications require different balances of softening point and impact resistance, it has been necessary to program a different polymerization procedure and/or apparatus for each copolymer having a different concentration of phenolphthalein-type diol and bisphenol-A or other type of diol. In carrying out such polymerization runs, it is necessary to remove residual polymer from polymerization equipment between runs in which different polymers are being prepared. In view of the costliness of such practices, it would be highly desirable to provide a more economical method for making a more heat resistant copolymer carbonate containing phenolphthalein-type diols while retaining the greater toughness characteristic of the polycarbonates of bisphenol-A type diols.

This invention is directed to a normally solid copolycarbonate of from 5 to 95 weight percent of a first polycarbonate of at least 5 mole percent of a trityldiol represented by one of the following formulas:

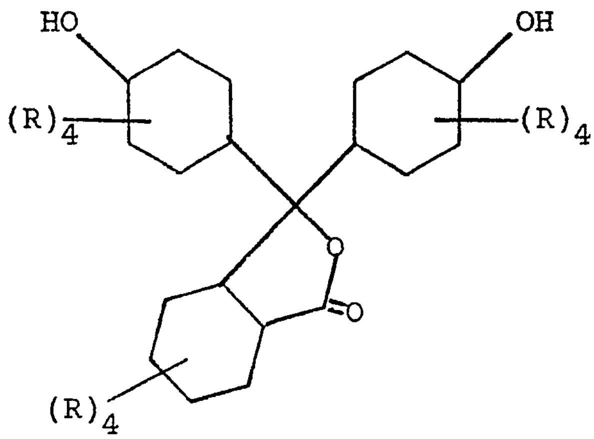

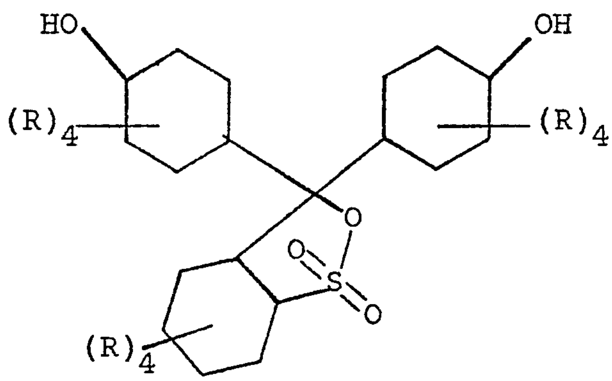

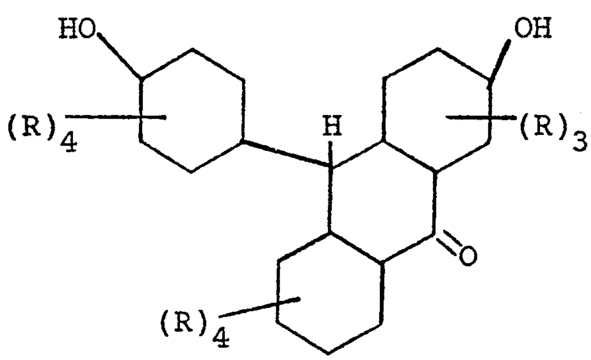

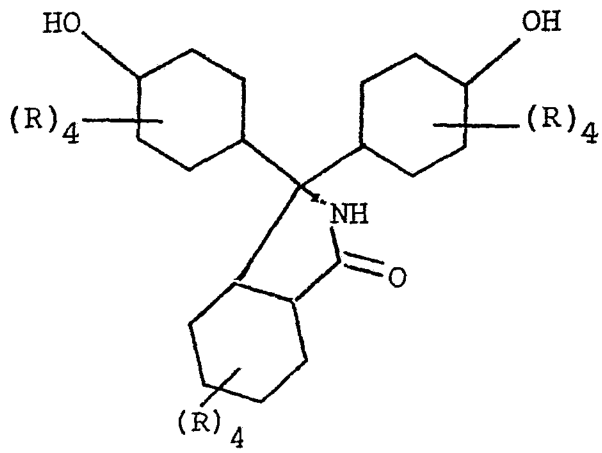

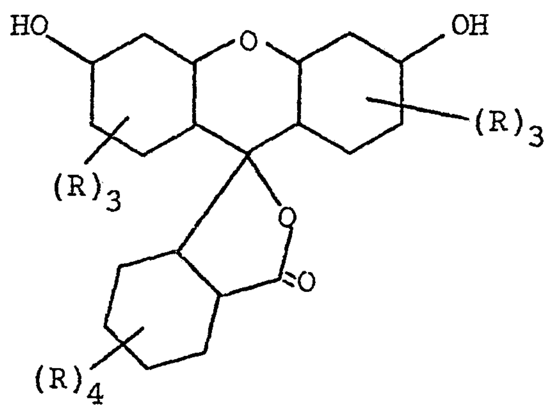

wherein each R is independently H, Cl, Br, I, $NO_2$, or an alkyl group having from one to six carbon atoms and from 5 to 95 weight percent of a second polycarbonate of at least 5 mole percent of a diol other than a trityldiol, the weight percentages being based on the diol content of the copolycarbonate. For the purpose of this invention, the term "copolycarbonate" shall mean a polymer of at least two different polycarbonates which copolycarbonate is prepared by reacting the polycarbonates. The terms "polycarbonate of a trityldiol" or "trityldiol polycarbonate" shall mean homopolymers and copolymers of trityldiols with themselves or other diols wherein the diols are linked together through carbonate linkages.

This invention is also directed to a process for preparing a normally solid copolycarbonate which comprises contacting a normally solid trityldiol polycarbonate with at least one other normally solid polycarbonate under conditions of shear and/or temperature sufficient to cause reaction of the polycarbonates to form a copolycarbonate of the polycarbonates. Preferably the resulting copolycarbonate is essentially a single polymeric species.

The copolycarbonate of this invention is similar in many respects to a polycarbonate copolymer containing similar proportions of the trityldiol and the other diol. As used herein, the term "polycarbonate copolymer" shall mean a copolymer prepared by copolymerization of one diol with a different diol in the presence of phosgene or a similar carbonate--generating agent. Surprisingly, however, copolycarbonates of this invention exhibit generally better impact resistance and flame resistance than possessed by polycarbonate copolymers of the same diols.

The copolycarbonates produced in the practice of this invention are suitably employed in most of the applications in which polycarbonates have previously been utilized. Applications of particular interest for the utilization of the copolybonates of this invention are as follows: aircraft parts, e.g., glazing, light covers, interior assemblies, engine shrouds, windows and other transparencies; automobile parts, e.g., air filters, fan shrouds, exterior components; housings for electrical motors and appliances, business and office

equipment, photographic equipment. In general, such copolycarbonates are particularly useful for applications requiring higher heat resistance than possessed by the homopolymers of bisphenol-A and similar diols.

Exemplary trityldiols include 3',3",5',5"--tetrachlorophenolphthalein, 3',3", 5',5"-tetraiodophenolphthalein, 3',3",5',5"-tetrabromophenolphthalein, 3',3"-dibromophenolphthalein, thymolphthalein, 3',3"-dibromo-5',5"-dimethylphenolphthalein, ortho-cresolphthalein, 3'-bromo-5',5"-dimethylphenolphthalein, dinitro-ortho-cresolphthalein, phenolphthalein, 3',3"-dichlorophenolsulphonephthalein, 3',3"-dibromophenolsulphonephthalein, 3',3"-dibromo-6',5"-dichlorophenolsulphonephthalein, 3',3"-dibromothymolsulphonephthalein, 3',3",4,5,5',5",6-octabromophenolsulphonephthalein, 4-bromophenolsulphonephthalein, 4,6-diiodophenolsulphonephthalein, 3-nitrophenolsulphonephthalein, 4,5,6-tribromophenolsulphonephthalein, 4,5,6-triiodophenolsulphonephthalein, 3',3",5',5"-tetranitrophenolsulphonephthalein, 3',3",5',5"-tetrachlorophenolsulphonephthalein, 3',3",5',5"-tetraiodophenolsulphonephthalein, 3',3",5',5"-tetrabromophenolsulphonephthalein, 3',3"-dibromophenolsulphonephthalein, thymolsulphonephthalein, 3',3"-dibromo-5',5"-dimethylphenolsulphonephthalein, ortho-cresolsulphonephthalein, 3',3",5',5"-tetrabromo-2',2"-dimethylphenolsulphonephthalein, phenolsulphonephthalein, phenolphthalimidine and substituted phenolphthalimidine, 5',5",--dichlorofluorescein, 5',5"-dibromofluorescein, 5',5"-diiodofluorescein, 5',5"-dinitrofluorescein, 5',5"-dimethylfluorescein, 2',5',5",7'-tetrachlorofluorescein, 3',3",4',5"-tetrabromofluorescein,

3',3",5',5"-tetraiodofluorescein, 3',3"-dinitrofluorescein, 3',3"-dihexylfluoroescein, 3',3"-dicyclohexylfluorescein, 3,6-dichlorofluorescein, 5',5"-dibromo-3',3"-dinitrofluorescein, 3',3"-diiodo-5',5"-dibromofluorescein, 3,6-dichloro-5',5"-dibromofluorescein, 3',3",5',5"-tetrabromo-3,4,5,6-tetrachlorofluorescein, 3',3",5',5"-tetrabromo-3,6-dichlorofluorescein, 3',3",5',5"-tetraiodo-3,6-dichlorofluorescein, 3',3",5',5"-tetraiodo-3,4,5,6-tetrachlorofluorescein and fluorescein. In the foregoing examples, the hydroxyls are preferably in the 4',4" positions. For purposes of this invention, the trityldiols are advantageously phenolphthalein and derivatives thereof, with phenolphthalein being preferred.

All of the foregoing trityldiols may be prepared by known methods, for example, phenolphthalein by reacting phthalic anhydride with a monohydric phenol, phenolsulfonephthalein by reacting ortho-sulfobenzoic anhydride with monohydric phenol, phthalidein by reacting bis(p-hydroxyphenyl)-toluic acid (hydrated phenolphthalein) with sulfuric acid, phenolphthalimidine by reacting phenolphthalein with aqueous ammonia, and fluorescein by condensing phthalic anhydride with resorcinol or a halogenated resorcinol. Of course, some of the derivatives of the forementioned compound may be made by halogenation or nitration of such compounds as is known to the art.

In addition to the trityldiol, the trityldiol polycarbonate can contain residues of other diols which are generally free of aliphatic unsaturation.

Such diols and similar polyhydroxy compounds can be aliphatic, cycloaliphatic or aromatic as such compounds are described in more detail hereinafter. In order that the trityldiol polycarbonates exhibit the desired high softening temperatures characteristic of their homopolymers, such polycarbonates advantageously contain at least 5 mole percent, usually from 10 up to 95 mole percent, and advantageously from 18 to 68 mole percent and preferably from 18 to 41 mole percent of the trityldiol based on the total diol of the trityldiol polycarbonate. For the same reason, the other diol is advantageously aromatic, preferably a bis(4-hydroxyphenyl)alkylidene such as bisphenol-A. While molecular weight of the trityldiol polycarbonate is not particularly critical, it is advantageous to make the polycarbonate such that it is normally solid at room temperature. Usually the weight average molecular weight (Mw) of the trityldiol polycarbonate as determined by gel permeation chromatography is from 6,000 to 50,000, advantageously from 24,000 to 35,000, and preferably from 24,000 to 29,000.

The trityldiol polycarbonates are readily prepared by phosgenating the trityldiol or mixtures thereof in the presence or absence of one or more other diols as defined hereinafter. Alternatively, the trityldiol can be reacted with the bischlorofomate derivatives of one or more of such other diols. Detailed descriptions of methods for preparing the trityldiol polycarbonates are set forth in U.S. Patent Nos. 3,036,036; 3,036,037; 3,036,038; and 3,036,039.

The polycarbonates of other diols (herein called other polycarbonates) are polycarbonates of diols other than the trityldiols described hereinbefore. Suitable other polycarbonates include homopolymers and copolymers of such other diols. Preferably, such other diols are aromatic diols such as the dihydric phenols represented by the formula:

$$HO-\left[\overset{(Y)_m}{\overset{|}{A}}\right]_t-\left[\overset{(R)_p}{\overset{|}{E}}\right]_s-\left[\overset{(Y)_m}{\overset{|}{A}}\right]_u-OH$$

wherein A is an aromatic group such as, for example, phenylene, biphenylene, naphthenylene, or anthra-cenylene; E is alkylene or alkylidene such as, for example, methylene, ethylene, ethylidene, propylene, propylidene, isopropylidene, butylene, butylidene, isobutylidene, amylene, isoamylene, amylidene, or isoamylidene or E may be cycloalkylene such as, for example, cyclopentylene, cyclohexylene, a sulfur--containing linkage such as sulfide, sulfoxide or sulfone, an ether linkage, a carbonyl group, a tertiary nitrogen group, or a silicone-containing linkage such as silane or siloxy; R is hydrogen or a monovalent hydrocarbon group such as alkyl, aryl, arylalkyl, or cycloaliphatic; Y is chlorine, bromine, fluorine, or R wherein R is defined above; m is any whole number from and including zero through the number of positions on A available for substitution; p is any whole number from and including zero through the number of available positions on E; t is a whole number equal to at least one; s is either zero or one; and u is any whole number including zero. Examples

of such dihydric phenols include 2,2-bis-(4-hydroxyphenyl)propane [bisphenol-A], 2,4'-dihydroxydiphenylmethane, bis-(2-hydroxyphenyl)methane, and 1,1-bis-(4-hydroxyphenyl)ethane. The aromatic diols are preferred primarily because polycarbonates thereof have generally higher softening points than polycarbonates of non-aromatic diols. The preferred dihydric phenols are the bis(4-hydroxyphenyl) alkylidenes (often called bisphenol-A type diols) including their aromatically substituted derivatives.

Therefore suitable but less preferred other diols include dihydroxy aliphatic or cycloaliphatic compounds which are essentially free of aliphatic unsaturation. For example, such suitable dihydroxy compounds include alpha-propylene glycol, 1,4-cyclohexanediol, 1,3-cyclopentanediol, hexamethylene glycol, decamethylene glycol, dipropylene glycol, or triethylene glycol.

The foregoing other polycarbonates usually contain at least 5 mole percent of one or more of the aforementioned dihydric phenols, advantageously at least 25 mole percent and preferably from 50 to 100 mole percent of dihydric phenol based on the total diol of said other polycarbonate. For the purposes of this invention, it is understood that the aforementioned mole percentages of diol for both the trityldiol polycarbonate and the other polycarbonate are based on total diol residue of the polycarbonate, i.e., pertain only to the diol residue resulting from the removal of the hydroxyl hydrogens of the diol and do not include the linking carbonyl groups. While not critical, the weight average molecular

 

weight (Mw) of said other polycarbonate as determined by gel permeation chromatography is generally in the range from 6000 to 50,000, advantageously from 20,000 to 40,000, and preferably from 28,000 to 33,000. Preferably such other polycarbonates are prepared by a conventional technique involving the reaction of the other diol or a mixture of such other diols with a carbonyl halide such as phosgene in an organic solution containing a base such as pyridine.

The copolycarbonates of this invention advantageously comprise from 5 to 95 weight percent, preferably from 25 to 75 weight percent, of one or more of the aforementioned trityldiol polycarbonates and advantageously from 95 to 5 weight percent, preferably from 75 to 25 weight percent, of one or more of the aforementioned other polycarbonate, said weight percentages being based on diol content. By the terminology "weight percentage based on diol content" is meant a percentage that is determined by dividing the weight of diol residue of the particular polycarbonate by the total weight of diol residue of the copolycarbonate. Although not critical, the weight average molecular weight (Mw) of said copolycarbonate as determined by gel permeation chromatography is usually in the range from 6,000 to 50,000, advantageously from 20,000 to 40,000, preferably from 23,000 to 30,000. Preferred copolycarbonates, particularly wherein phenolphthalein is the trityldiol, bisphenol-A is the other diol and the copolycarbonate contains less than 50 mole percent based on total diol of phenolphthalein, have yellowness indices no greater than 35, preferably no more than 20, as determined by ASTM D-1925-70.

Preferred copolycarbonates also exhibit Vicat softening points as determined by ASTM D-648-56 of from 150°C to 250°C, advantageously from 155°C to 200°C and preferably from 180°C to 200°C. The preferred copolycarbonates are further characterized by excellent clarity, e.g., those exhibiting a % light transmission of at least 50%, advantageously at least 70%, and preferably at least 80% as determined according to ASTM D-1003-61.

It is further understood that the copolycarbonates of this invention may be the reaction product of more than two polycarbonates. For example, a copolycarbonate may be prepared from a homopolycarbonate of bisphenol-A, and two polycarbonate copolymers of phenolphthalein and bisphenol-A, each polycarbonate copolymer having a different concentration of phenolphthalein and bisphenol-A. Other combinations are also suitable.

Advantageously such copolycarbonates are the reaction products of polycarbonates of phenolphthalein and substituted phenolphthaleins as described hereinbefore and polycarbonates of bisphenol-A and analogues thereof as described hereinbefore and in U.S. Patent 3,169,121. Preferably, such copolycarbonates are reaction products of polycarbonate copolymers of phenolphthalein and bisphenol-A and polycarbonate homopolymers of bisphenol-A.

The copolycarbonate of the present invention is prepared by reacting the trityldiol polycarbonate with the other polycarbonate. Preferably, such reaction is carried out by intimately mixing such

polycarbonates under conditions of shear and temperature until the resulting reaction product is essentially a single polymeric species. Characteristically, such a preferred copolycarbonate, which is essentially a single polymeric species, exhibits a single glass transition temperature when the copolycarbonate is subjected to an increasing temperature scan using a differential scanning colorimeter. This glass transition temperature for the copolycarbonate normally lies between the glass transition temperatures of the original polycarbonates used to make the copolycarbonate.

Advantageously, such reaction is carried out in a mixing apparatus capable of providing a low to moderate shear from 100 to 4,700 reciprocal seconds, preferably from 600 to 3,000 reciprocal seconds. Such apparatus include screw-type extruders and screw-type mixers, preferably twin scew extruders. During such shearing, it is desirable to maintain the reaction mixture in a heat plastified state. Advantageously, such temperatures range from 250 to 375°C, preferably from 280 to 340°C. Residence time of the reactants in the mixing apparatus will vary depending on temperature and shear. Generally, however, residence times are normally from 0.5 to 2 minutes, preferably from 0.5 to 1 minute, when the aforementioned conditions of shear and temperature are used.

In suitable, but less preferred methods, such copolycarbonates are prepared at little or no shear by mixing the aforementioned polycarbonates in solution, for example, in methylene chloride or other suitable solvent and subsequently evaporating off the solvent, e.g., in a devolatilization

process. Alternatively, the polycarbonates, in granular form, may be dry blended and then molded under conditions providing little or no shear as in a compression molding apparatus, a gear pump or a melt index apparatus. In such devolatilization or molding processes, however, it is necessary in order to achieve reaction that temperatures from 290° to 370°C, preferably from 300° to 320°C, be employed. Preferably, during the devolatilizing process, the solution blended polycarbonates are subjected to some minimal shear as in a devolatilizing screw extruder.

The copolycarbonate of the present invention can be converted into moldings, films, fibers and coatings. They can be combined with various organic and inorganic reinforcing agents and fillers, for example minerals, and also substances producing special effects, pigments, dye stuffs, stabilizers against damage by ultraviolet light, heat treatment, and oxidation, lubricants, antistatic agents and other additives. They can be employed in numerous applications in which bisphenol-A polycarbonates have also been used. In addition they can, in particular, be employed in applications whierein a high softening point and good resistance to impact and flame are important.

The following examples are given to further illustrate the invention.

Examples 1, 2, and 3 and Comparative Runs A, B, C, and D

A 500-g portion of commercial bisphenol-A polycarbonate homopolymer having a weight average molecular weight (Mw) of 32,000 and sold in granular form under the trademark LEXAN 141 by General Electric are dissolved in sufficient methylene chloride to form a 10 weight percent polymer solution. A dry powder is prepared from this solution by adding excess hexane to the methylene chloride polymer solution, filtering the resulting precipitate and washing the filtered precipitate with hexane and drying. A 50-g portion of the bisphenol-A polycarbonate powder thus obtained and a 50-g portion of a powder of bisphenol-A/phenolphthalein polycarbonate copolymer having a weight average molecular weight of 7800 and containing the monomeric species in a 1:1 weight ratio (58.36:40.64 on a mole basis of bisphenol-A to phenolphthalein) are dry blended using a simple roll mixer. The powdered mixture is then compressed at room temperature into cakes (2-1/4 inch (5.7 cm) diameter x 1/4 inch (6.3 mm) thick) using a cylinder with a piston mold and a hydraulic press. After drying at 130°C for four hours, the cakes are placed between aluminum sheets and inserted between the platens of a hydraulic press held at 420°F (216°C). An initial force of 5 tons (4536 kilograms) is applied to the cake for a period of three minutes. The polymer mixture of the cake is first melted, then cooled and finally recovered as solid, hazy disc having a thickness of approximately 1/16 inch (1.6 mm). The discs are cut into strips of 1/4 inch (6.3 mm) width, and 5 grams of the cut strip is placed in a melt index apparatus (ASTM D 1238) from which the orifice has

been removed and its lower outlet plugged. The melt index apparatus is heated to 530°F (277°C) and the ram is inserted and a 1 kilogram weight is placed on the ram. After 5 minutes the steel plug in the lower outlet is removed and hot polymer melt is forced immediately from the barrel. The foregoing heat treatment in the melt indexer is repeated two more times employing heating periods of 15 and 30 minutes. Samples of polymer used and obtained in each step of Example 1 are analyzed by gel permeation chromatography. The results of the analysis of molecular weight distribution and the appearance of each polymer sample is reported in Table I.

TABLE I

| Sample Number | Starting Polymer (1) Composition | Heat Treatment Temp °C/min | Appearance |
|---|---|---|---|
| Comparative Run A | BPA | None | White Powder |
| Comparative Run B | BPA/PP (50/50) | None | White Powder |
| Comparative Run C | 1 BPA + 1 BPA/PP | None | White Powder |
| Comparative Run D | " | 216°/3 | Hazy Thin Solid |
| Example 1 | " | 277°/5 | Hazy Solid |
| Example 2 | " | 277°/15 | Hazy Solid |
| Example 3 | " | 277°/30 | Clear Brownish Solid |

TABLE I

| Sample Number | Molecular Weight(2) (3) | | | | Elution Curve Transition(3) | |
|---|---|---|---|---|---|---|
| | Mz | Mw | Mn | Mw/Mn | Peak, Counts | Shoulder, counts |
| Comparative Run A | 51100 | 32000 | 12100 | 2.64 | 38.1 | None |
| Comparative Run B | 15100 | 7860 | 2840 | 2.77 | 44.4 | " |
| Comparative Run C | 52600 | 26050 | 5989 | 4.35 | 38.7 | 43.3 |
| Comparative Run D | 52000 | 25000 | 5900 | 4.24 | 39.1 | 42.5 |
| Example 1 | 55500 | 25300 | 6360 | 3.98 | 41.8 | None |
| Example 2 | 38600 | 18200 | 5100 | 3.57 | 42.2 | " |
| Example 3 | 28740 | 16100 | 6650 | 2.42 | 41.8 | " |

TABLE I (Continued)

(1) BPA -- bisphenol-A polycarbonate homopolymer (LEXAN 141), BPA/PP (50/50) -- bisphenol-A/phenolphthalein (in 1:1 weight ratio of BPA and PP) polycarbonate copolymer, 1 BPA + 1 BPA/PP mixture -- 1:1 weight ratio of bisphenol-A polycarbonate homopolymer and bisphenol-A/phenolphthalein polycarbonate copolymer.

(2) Mz - Z-average molecular weight
Mw - weight average molecular weight
Mn - number average molecular weight
Mw/Mn - molecular weight distribution
More complete definitions of molecular weight averages are given by F. W. Billmeyer, Jr. in Textbook of Polymer Chemistry, Interscience Publishers, Inc. New York, N. Y. (1957) at pages 106, 117 and 146.

(3) Molecular weights and Elution Curves are determined as gel permeation chromatography method described by John C. Moore in J. Polymer Science, Vol. A-Z, p. 835 (1964).

As evidenced by the foregoing data, Comparative Runs A and B are polymers having relatively narrow molecular weight distributions as represented by $M_w/M_n$ but significantly different average molecular weights as represented by $M_z$, $M_w$ and $M_n$. Comparative Runs C and D show that mixtures of the two polymers result in a broadening of molecular weight distribution from 2.64-2.77 to 4.24-4.35. Examples 1, 2 and 3 show that as the mixture is heated at 530°F (277°C) for a period of time the molecular weight distribution begins to narrow to the point as shown in Example 3 wherein the distribution is narrower than it is for either of the two starting polymers. The $M_w$ of Example 3 being 16100, which is between the $M_w$'s of the starting materials, plus the narrowing of molecular weight distribution from Comparative Run C to Example 3 indicate that reaction between the polymer starting materials has occurred. It is believed that the reaction products of Examples 1-3 either approach or are essentially single polymer species in the same sense that the polymers of Comparative Runs A and B are single polymer species.

<u>Example 4 and Comparative Run E</u>

A mixture containing 50.4 weight percent bisphenol-A polycarbonate homopolymer (sold under the trademark MERLON M50 F-1000 by Mobay Chemical) and 49.6 weight percent of bisphenol-A/phenolphthalein polycarbonate copolymer described in Examples 1, 2 and 3 is prepared by dry blending granules of the two polycarbonates. This mixture is starve fed in granular form to a 0.8 inch (2 cm) twin screw mixing extruder (Welding Engineers) using the

following conditions: barrel temperature (feed to die) profile, 480°F (249°C), 600°F (316°C), 620°F (327°C), 620°F (327°C), 575°F (302°C); motor, amps 40; and screw speed, rpm 150. The screw configuration of the extruder is such that each screw has a cylindrical section approximately midway between the feed port and the die and a reverse flight section near the die. The remainder of the screws comprise normal forward flight sections. The resulting extrudate is then molded into tensile bars on a molding machine (Newberry Model HI-30-RS) using the following conditions: barrel temperature (nozzle to feed) profile 580°F (304°C), 605°F (318°C), 590°F (310°C); and mold temperature, face/cavity, 180/180°F (82/82°C). The tensile bars are tested for impact resistance, softening temperature, yield strength, yield elongation, molecular weight, clarity and color. For purposes of comparison, test bars are prepared in a similar manner by molding a bisphenol-A/-phenolphthalein polycarbonate copolymer containing the same amount of phenolphthalein and bisphenol-A as the aforementioned molded bars. These comparative bars are also tested and the results are recorded in Table II.

TABLE II

| Composition and Properties | Example 4 | Comparative Run E |
|---|---|---|
| Weight % Phenolphthalein (mole %) (1) | 25(18.58) | 25(18.58) |
| Notched Izod Impact (2), ft-lb/in (Joules/m) | 11.6 (619) | 11.3 (603) |
| Vicat Softening (3), °C | 182 | 183 |
| Yield Strength (4), psi ($kg/cm^2$) | 9600 (675) | 9600 (675) |
| Yield Elongation (5), % | 7.0 | 7.3 |
| $M_w$ (6), GPC | 26,500 | 29,500 |
| Clarity (7), | | |
| % Light Transmittance | 78 | 70.5 |
| % Haze | 5.9 | 12.2 |
| Yellowness Index (8) | 19.0 | 24.1 |

(1) Percentages based on total diol of the copolycarbonate (Sample No. 1) or polycarbonate copolymer (Sample No. C.)
(2) ASTM D-256-56
(3) ASTM D-648-56
(4) ASTM D-638-68
(5) ASTM D-638-68
(6) Gel Permeation Chromatography Method described in (3) of Table I
(7) ASTM D-1003-61
(8) ASTM D-1925-70

Examples 5, 6, 7, 8, and 9 and Comparative Runs F, G, H, I, and J

As further evidence of improved impact strength resulting from preparing the copolycarbonates by the method of the present invention, five examples and five comparative runs of

copolycarbonates containing varying amounts of a bisphenol-A homopolymer having an Mw of 30,400 and a bisphenol-A/phenolphthalein polycarbonate copolymer containing 50% by weight of each monomer and having an Mw of 30,900 are prepared by molding granular mixtures of the polycarbonates into tensile bars using a 1 ounce (28 g) reciprocating screw injection molding machine wherein the molding conditions are as follows: barrel temperature 550°F (288°C); mold temperature 150°F (66°C); screw speed 120 rpm; injection pressure 23,000 psi (1617 $kg/cm^2$); cycle time 22 seconds. Following the same general molding technique, polycarbonate copolymers containing similar amounts of phenolphthalein and bisphenol-A and prepared by copolymerizing the monomers are also molded into tensile bars and tested for impact strength. The results of these tests are recorded in the following Table III.

TABLE III

| | Weight % Phenol-phthalein(1) (mole %) | Impact Strength(2) ft-lb/in (J/m) |
|---|---|---|
| Example 5 | 5.1 (3.61) | 17.2 (918) |
| Comparative Run F | 5.1 (3.61) | 16.6 (886) |
| Example 6 | 10.3 (7.29) | 15.7 (838) |
| Comparative Run G | 10.3 (7.29) | 14.8 (790) |
| Example 7 | 15.5 (11.16) | 14.8 (790) |
| Comparative Run H | 15.5 (11.16) | 13.0 (694) |
| Example 8 | 20.6 (15.08) | 13.3 (710) |
| Comparative Run I | 20.6 (15.08) | 11.2 (598) |
| Example 9 | 25.7 (19.14) | 11.2 (598) |
| Comparative Run J | 25.7 (19.14) | 9.4 (502) |

(1) weight percent (mole percent) phenolphthalein based on total diol of the copolycarbonate (Example 5-9) or the polycarbonate copolymer (Comparative Runs F-J).

(2) ASTM D-256-56

As evidenced by the data set forth in Table III for a given concentration of phenolphthalein in the copolycarbonate, the copolycarbonates of phenolphthalein polycarbonates and bisphenol-A polycarbonates as prepared by the method of the present invention exhibit impact strengths superior to the polycarbonate copolymers prepared by copolymerizing the monomers.

1. A normally solid copolycarbonate of from 5 to 95 weight percent of a first polycarbonate of at least 5 mole percent of a trityldiol represented by one of the following formulas:

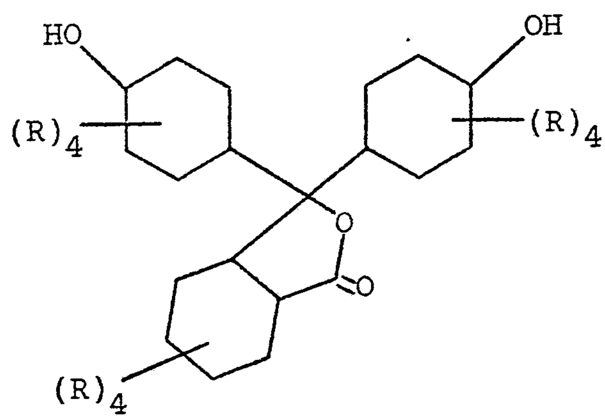

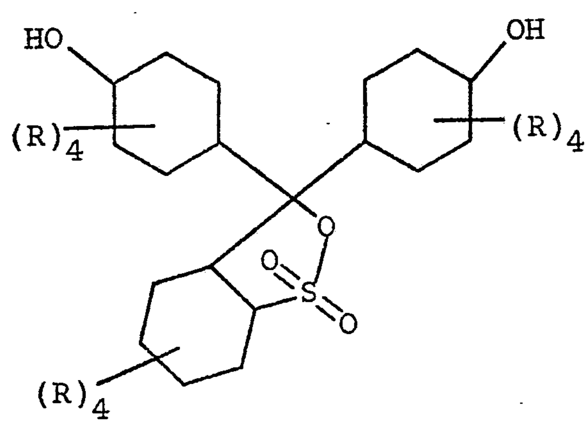

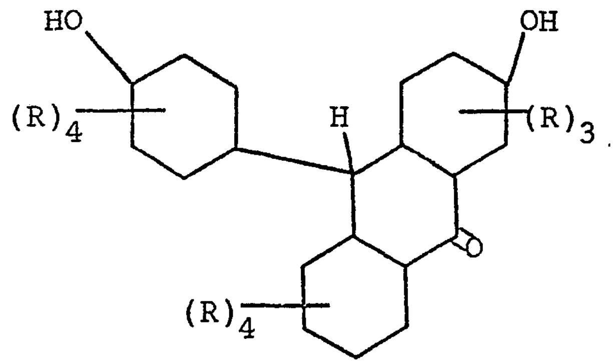

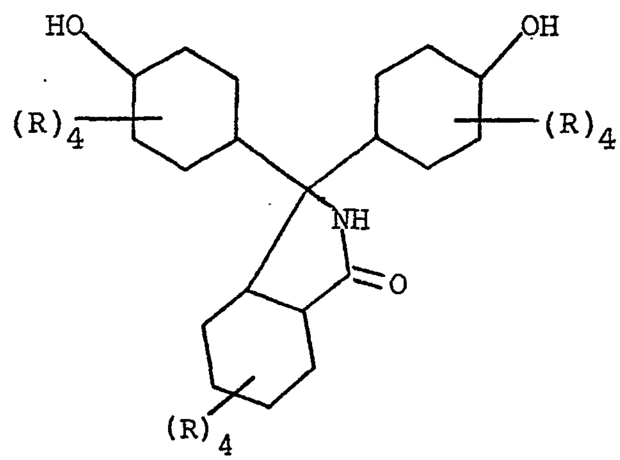

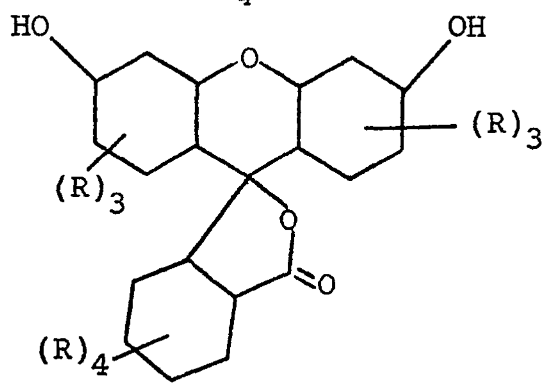

wherein each R is independently H, Cl, Br, I, $NO_2$, or alkyl having from 1 to 6 carbons and from 5 to 95 weight percent of a second polycarbonate of at least 5 mole percent of a diol other than a trityldiol, said weight percentages being based on diol content of the copolycarbonate.

2. The copolycarbonate of Claim 1 wherein the diol of the second polycarbonate is a dihydric phenol.

3. The copolycarbonate of Claim 2 wherein the trityldiol is phenolphthalein and the dihydric phenol is a bis(4-hydroxyphenyl)alkylidene.

4. The copolycarbonate of any one of Claims 1, 2, or 3 wherein the weight average molecular weight of the first polycarbonate and the second polycarbonate are both from 6,000 to 50,000.

5. A process for preparing a normally solid copolycarbonate which comprises contacting a normally solid trityldiol polycarbonate with at least one other normally solid polycarbonate under conditions of shear and/or temperature sufficient to cause reaction of the polycarbonates to form a copolycarbonate of the polycarbonates.

0013282

Application number

EP 79 100 074.8

European Patent Office

# EUROPEAN SEARCH REPORT

## DOCUMENTS CONSIDERED TO BE RELEVANT

| Category | Citation of document with indication, where appropriate, of relevant passages | Relevant to claim |
|---|---|---|
| | GB - A - 938 788 (KODAK) * claim 4 * -- | 5 |
| | GB - A - 1 485 310 (CIBA-GEIGY) * claims 1 and 22 * -- | 5 |
| A | DE - A - 2 637 003 (THE DOW CHEMICAL) * claims 1 and 3 * -- | 1,3 |
| A | US - A - 3 035 021 (JOSEPH H. HOWE) * claims 5 and 7* --- | 1,3 |

**CLASSIFICATION OF THE APPLICATION (Int. Cl.²)**

C 08 G 81/00
C 08 G 63/62
C 08 L 69/00

**TECHNICAL FIELDS SEARCHED (Int.Cl.²)**

C 08 G 63/62
C 08 G 81/00
C 08 L 69/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 09-08-1979 | MARX |

EPO Form 1503.1 06.78